# EUROPEAN PATENT SPECIFICATION

(11) **EP 4 023 383 B1**
(45) Date of publication and mention of the grant of the patent: **15.07.2026**
(21) Application number: 21194812.0
(22) Date of filing: 03.09.2021
(51) Int. Cl.: B23K 9/167, B23K 9/173, B23K 26/03, B23K 26/21, B23K 31/02, B23K 31/12

(54) **PROCESSING DEVICE, WELDING SYSTEM, PROCESSING METHOD, AND STORAGE MEDIUM**
VERARBEITUNGSVORRICHTUNG, SCHWEISSSYSTEM, VERARBEITUNGSVERFAHREN SOWIE SPEICHERMEDIUM
DISPOSITIF DE TRAITEMENT, SYSTÈME DE SOUDAGE, PROCÉDÉ DE TRAITEMENT ET SUPPORT D'ENREGISTREMENT

(30) Priority: 04.01.2021 JP 2021000171
(43) Date of publication of application: 06.07.2022
(73) Proprietor: Kabushiki Kaisha Toshiba, Minato-ku Tokyo (JP)
(72) Inventor: Shiomi, Yasutomo, Minato-ku Tokyo (JP); Sakai, Tetsuo, Minato-ku Tokyo (JP)
(74) Representative: Hoffmann Eitle

(56) References cited:
- EP-A2- 1 642 366
- EP-B1- 1 642 366
- CN-A- 111 292 303
- US-A1- 2006 006 156
- US-A1- 2008 210 674

## Description

### FIELD

Embodiments described herein relate generally to a processing device, a welding system, a processing method, and a storage medium.

### BACKGROUND

There is technology that extracts a feature from an image that is imaged when welding and detects a defect based on the feature. It is desirable to improve the convenience of such technology.

US 2008/210674 A1 (starting document for the present invention) describes the design and working principle of a welding monitoring system that can monitor the spectra of zinc and iron in the plasma generated during a welding process involving zinc-coated steel. The monitoring system is capable of monitoring multiple parameters, including spectral line intensity, electron temperature, and ratio of zinc and iron composition in the plasma. The results can then be used individually or in combination to predict resulting weld quality and generate appropriate feedback control signals. EP 1 642 366 A2 describes a fully integrated automated laser weld process control system (LWPCS) and method of controlling the fabrication of structural parts, particularly for shipbuilding and other industries. The LWPCS defines joint and weld quality attributes as process control variables and integrates these weld quality variables, along with the more traditional process parameters such as laser power, wire feed, GMAW voltage and active seam tracking, into a closed-loop monitoring and control system. The LWPCS includes a central processor and a plurality of subsystems that control laser beam positioning, vision-based monitoring and image processing, active weld-quality monitoring and inspection, adaptive beam delivery, and seam tracking. Cross-communication between subsystems is managed by the central processor. In addition to process control, the system extracts weld quality attributes during the weld process and provides immediate documentation of the weld quality.

US 2006/006156 A1 describes a laser welding method including providing a storage medium containing stored data about possible welding defects and associated repair welding parameters, welding a workpiece with a laser to produce weldings on the workpiece, monitoring the produced weldings for defective weldings, and, in response to detecting a defective welding from among the monitored weldings: comparing the defective welding with the stored data about possible welding defects; selecting repair welding parameters from among the associated repair welding parameters based on the comparison; and then performing a repair welding in a region of the detected defective welding in accordance with the selected repair welding parameters.

According to the present invention, the underlying problem is solved by a processing device as defined in claim 1, a welding system as defined in claim 13 and comprising such device, by a processing method as defined in claim 14, and by a storage medium as defined in claim 15.

Preferred embodiments of the present invention are defined in the dependent claims.

Examples and technical descriptions of apparatuses, products and/or methods in the description and/or drawings which are not covered by the claims are presented not as embodiments of the invention but as background art or examples useful for understanding the invention.

### BRIEF DESCRIPTION OF THE DRAWINGS

FIG. 1 is a schematic view illustrating a configuration of a welding system that includes a processing device according to an embodiment;
FIGS. 2A and 2B are schematic views for describing the operations of the processing device according to the embodiment;
FIGS. 3A and 3B are schematic views for describing the operations of the processing device according to the embodiment;
FIGS. 4A and 4B are images illustrating output examples of the first model;
FIGS. 5A and 5B are images illustrating output examples of the first model;
FIG. 6 is a flowchart illustrating processing according to the processing device according to the embodiment;
FIGS. 7A and 7B are schematic views illustrating images used to train the first model;
FIGS. 8A and 8B are schematic views illustrating images used to train the first model;
FIG. 9 is a flowchart illustrating the processing according to the processing device according to the modification of the embodiment;
FIG. 10 is a schematic view illustrating the configuration of another welding system that includes the processing device according to the embodiment;
FIGS. 11A to 11C are schematic views illustrating display examples of the processing device according to the modification of the embodiment; and
FIG. 12 is a schematic view illustrating a hardware configuration.

### DETAILED DESCRIPTION

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

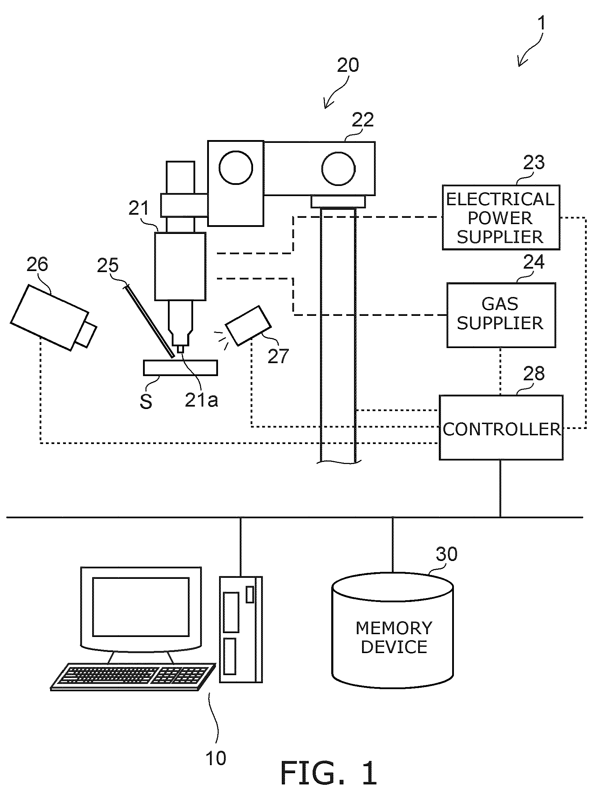

FIG. 1 is a schematic view illustrating a configuration of a welding system that includes a processing device according to an embodiment.

The welding system 1 includes the processing device 10, a welding device 20, and a memory device 30.

The welding device 20 joins two or more members by welding. For example, the welding device 20 performs arc welding or laser welding. Specifically, arc welding is tungsten inert gas (TIG) welding, metal inert gas (MIG) welding, metal active gas (MAG) welding, carbon dioxide gas arc welding, etc. Mainly herein, an example is described in which the welding device 20 performs TIG welding.

The welding device 20 includes, for example, a torch 21, an arm 22, an electrical power supplier 23, a gas supplier 24, a wire 25, an imager 26, an illuminator 27, and a controller 28.

The torch 21 includes an electrode 21a that is made of tungsten. The tip of the electrode 21a is not covered with the torch 21. For example, the torch 21 is mounted to the arm 22 that is articulated and includes multiple links. Or, the torch 21 may be gripped by a worker.

The electrical power supplier 23 is electrically connected with at least one of the electrode 21a or a welding object S. A voltage is applied between the electrode 21a and the welding object S by the electrical power supplier 23; and an arc discharge is generated. One of the electrode 21a or the welding object S may be set to a common potential (e.g., a ground potential); and the electrical power supplier 23 may control only the potential of the other of the electrode 21a or the welding object S. In the example of FIG. 1, the electrical power supplier 23 controls only the potential of the electrode 21a.

The gas supplier 24 is connected to the torch 21. The gas supplier 24 supplies an inert gas to the torch 21. Or, the gas supplier 24 may supply a gas mixture of an inert gas and an active gas. The gas that is supplied to the torch 21 is blown from the tip of the torch 21 where the electrode 21a is exposed toward the welding object S.

The tip of the wire 25 is located in the space in which the arc discharge is generated. The tip of the wire 25 is melted by the arc discharge and drops onto the welding object S. The welding object S is welded by the molten wire 25 solidifying. For example, the wire 25 is fixed with respect to the arm 22 and is automatically supplied to match the progress of the melting.

When welding, the imager 26 images the spot at which the welding is performed. The imager 26 acquires a still image by imaging the welding spot. Or, the imager 26 may image a video image. The imager 26 acquires a still image by cutting out a portion of the video image. The imager 26 is, for example, a camera that includes a CCD image sensor or a CMOS image sensor.

The illuminator 27 illuminates the welding spot when welding to obtain a clearer image from the imager 26. If a sufficiently bright image is obtained without illuminating the welding spot, the illuminator 27 may not be included.

The controller 28 controls the operations of the components of the welding device 20 described above. For example, the controller 28 welds the welding object S along a prescribed direction by generating the arc discharge while driving the arm 22. The controller 28 also may control the setting of the imager 26, the setting of the illuminator 27, etc.

The controller 28 stores the image acquired by the imager 26 in the memory device 30. For example, the controller 28 associates the image that is imaged, the welding parameters when imaging, and the imaging conditions with the position and stores the result in the memory device 30.

The welding parameter includes, for example, at least one selected from the group consisting of the speed in the movement direction (a first direction) of the torch 21, the position of the torch 21 in the width direction (a second direction) perpendicular to the movement direction, the current supplied to the torch 21, the voltage supplied to the torch 21, and the supply rate of the wire 25. The imaging conditions include, for example, settings of the imager 26 such as the exposure time, the aperture stop, the sensitivity (ISO), etc. The imaging conditions may include the settings of the illuminator 27.

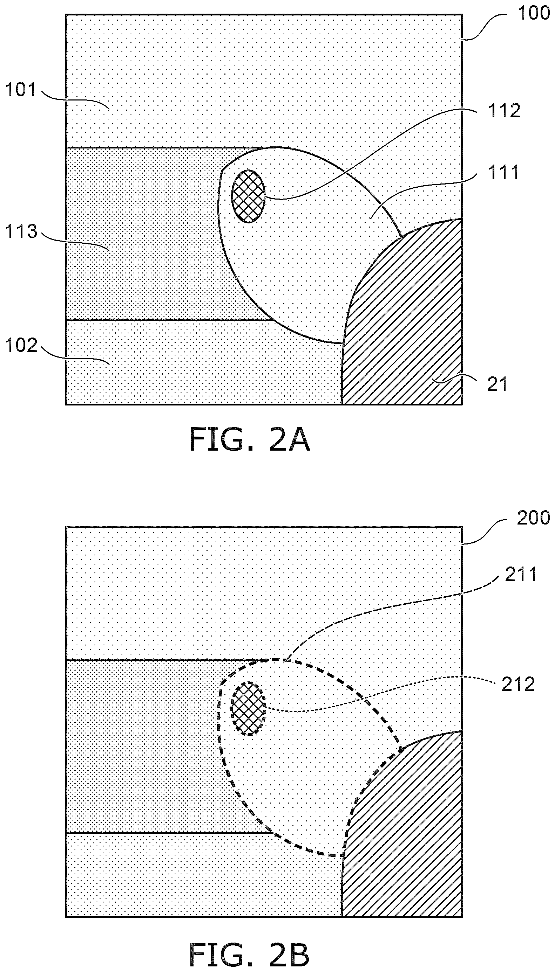

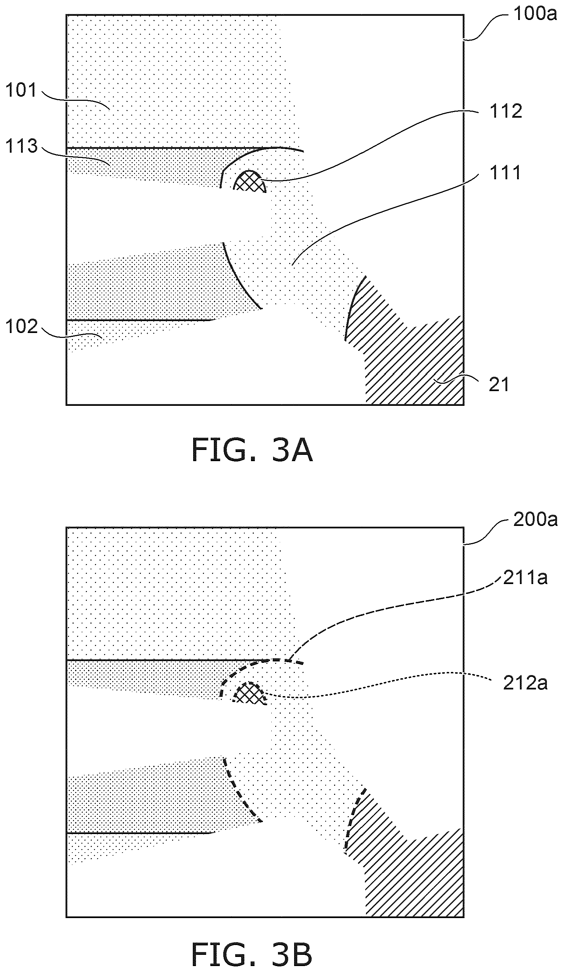

FIGS. 2A and 2B and FIGS. 3A and 3B are schematic views for describing the operations of the processing device according to the embodiment.

The processing device 10 according to the embodiment checks whether or not a defect exists at the welded spot from the image that is imaged when welding. First, the processing device 10 accesses the memory device 30 and acquires the first image that is imaged when welding. The processing device 10 inputs the first image to a first model.

The first model detects the defect and the weld pool in the welding image according to the input of the welding image in which the weld pool is visible. The weld pool is a pool of liquid metal formed by melting the metal (the wire 25). As an example, the defect is a circular hole defect that is formed by the welding object S partially melting excessively when welding, piercing the welding object S, and dropping away as molten metal. In another example, the defect is overlap, undercut, or a crack.

FIG. 2A is a schematic view illustrating an example of an image that is imaged when welding. A first member 101 and a second member 102 are visible in the image 100 illustrated in FIG. 2A. The first member 101 and the second member 102 are joined by welding. The torch 21 and the not-illustrated wire 25 are located proximate to the boundary between the first member 101 and the second member 102. The wire 25 is melted by the electric discharge generated at the tip of the torch 21; and a weld pool 111 is formed. A bead 113 is formed by the metal of the weld pool 111 solidifying. In the example of FIG. 2A, a defect 112 is formed by partial burn-through of the first member 101 or the second member 102 in a circular shape due to excessive melting in the weld pool 111.

When the image of FIG. 2A is input, the first model detects a first feature that indicates the outer edge of the weld pool 111, and a second feature that indicates the outer edge of the defect 112. The detection of the first feature indicates that the weld pool 111 exists in the image 100. The detection of the second feature indicates that a defect exists in the image 100. Also, the second feature indicates the level of the defect 112. For example, the magnitude of the luminance of the second feature indicates the level of the defect 112.

The processing device 10 acquires the output result from the first model. The output of the first model includes a first detection result related to the weld pool of the first image, and a second detection result related to the defect of the first image. When the weld pool 111 exists in the image, the first detection result includes the first feature. In other words, the first detection result indicates the existence/nonexistence of the weld pool. When the defect 112 exists, the second detection result includes the second feature. In other words, the second detection result indicates the existence/nonexistence of the defect.

FIG. 2B is a schematic view illustrating the output result of the first model for the input of the image of FIG. 2A. An output result 200 is an image that includes the first feature 211 of the weld pool 111 and the second feature 212 of the defect 112. In the example, the first feature 211 indicates the outer edge of the weld pool 111. The second feature 212 indicates the outer edge of the defect 112.

FIG. 3A is a schematic view illustrating another example of an image that is imaged when welding. Similarly to the image 100, the first member 101, the second member 102, the torch 21, the weld pool 111, the defect 112, and the bead 113 are visible in an image 100a illustrated in FIG. 3A. However, blown out highlights of a portion of the image occurs due to a light emission due to electric discharge.

FIG. 3B is a schematic view illustrating the output result of the first model for the input of the image of FIG. 3A. In the image 100a, only portions of the weld pool 111 and the defect 112 are visible. Therefore, an output result 200a includes a first feature 211a indicating a portion of the weld pool 111 and a second feature 212a indicating a portion of the defect 112.

The processing device 10 uses the first and second detection results to perform first to third determinations.

In the first determination, the processing device 10 uses the first detection result to determine the appropriateness of the second detection result. Specifically, the processing device 10 determines whether or not the weld pool is appropriately detected in the first detection result. As illustrated in FIGS. 2B and 3B, the area (the number of pixels) of the first feature in the first detection result increases as the weld pool becomes clearer in the first image. The processing device 10 compares the number of pixels of the first feature to a preset first threshold. The pixel values of each pixel included in the first feature may change according to the weld pool 111 in the welding image. In such a case, the processing device 10 compares the cumulative sum (a first cumulative sum) of the pixel values of the pixels included in the first feature to the preset first threshold.

For example, in the first detection result, the first feature is represented using red in RGB color space. The pixel values of each pixel of the first feature respectively represent the luminances of RGB. The processing device 10 calculates the first cumulative sum by summing the red luminance of the first feature. The pixel values of the first feature are not limited to the example and may represent the hue, the color saturation, the lightness, etc., in HSV color space.

When the first cumulative sum is not less than the first threshold, the processing device 10 determines that the second detection result is appropriate. In other words, the first image is clear enough that the weld pool and the defect can be detected; and the detection result of the defect in the first image is determined to be appropriate. When the second detection result is determined to be appropriate, the processing device 10 performs the second determination. When the first cumulative sum is less than the first threshold, the processing device 10 determines that the second detection result is inappropriate. For example, even when the defect is not detected, there is a possibility that the defect may be hidden by blown out highlights in the first image. When the second detection result is determined to be inappropriate, the processing device 10 does not perform the second determination.

In the second determination, the processing device 10 uses the second detection result to determine an existence/nonexistence of the defect in the first image. The pixel value of each pixel of the second feature output from the first model changes according to the sureness of the defect. Higher pixel values indicate that the first model strongly estimates that the pixel is a portion of the defect. The processing device 10 compares the cumulative sum (a second cumulative sum) of the pixel values included in the second feature to a preset second threshold. The second cumulative sum is zero when the second feature is not detected.

For example, in the second detection result, the second feature is represented using yellow in RGB color space. The pixel values of each pixel of the second feature respectively represent the luminances of RGB. The processing device 10 calculates the second cumulative sum by summing the red luminance and the green luminance of the first feature. The pixel values of the second feature are not limited to the example and may represent the hue, the color saturation, the lightness, etc., in HSV color space.

When the second cumulative sum is not less than the second threshold, the processing device 10 determines that the defect exists. When the defect is determined to exist in the second determination, the processing device 10 performs a third determination. When the second cumulative sum is less than the second threshold, the processing device 10 determines that the defect does not exist. When the defect is determined not to exist in the second determination, the processing device 10 does not perform the third determination.

In the third determination, the processing device 10 counts the number of times that the defect is consecutively determined to exist in the second determination. The processing device 10 compares the count to a preset third threshold. When the count is not less than the third threshold, the processing device 10 confirms the existence of the defect. When the count is less than the third threshold, the processing device 10 does not confirm the existence of the defect.

Images are consecutively imaged when welding. The multiple first images are stored in the memory device 30. The processing device 10 acquires the first and second detection results and performs the first determination for each of the multiple first images. When the second detection result is determined to be appropriate in the first determination, the processing device 10 further performs the second determination. When the defect is determined to exist in the second determination, the processing device 10 refers to the recent previous determination result. The existence of the defect is confirmed when the defect is consecutively determined to exist in the newest determination and in the recent determination, and the consecutive determination count is not less than the third threshold.

For example, the existence of the defect is confirmed for the multiple first images of the consecutive determinations. After the defect is determined to exist in the second determination, the count is reset when the second detection result is determined to be inappropriate in the first determination. Or, the count may not be reset when the second detection result is determined to be inappropriate in many images in the first determination. That is, a user can select whether or not to perform the reset as appropriate according to the necessary detection accuracy of the defect.

Even when a hole that may become a defect occurs in the weld pool, there are cases where the defect is repaired by metal subsequently flowing into the hole. If the existence of the defect is confirmed based on the result of one second determination, there is a possibility that the existence of the defect may be confirmed even though a defect actually does not exist.

The processing device 10 records the quality when the processing described above ends. Specifically, the processing device 10 associates the imaging position of the first image and the quality for the imaging position, and stores the result. For example, the controller 28 refers to the memory region in which the position (the coordinate) of the tip of the arm 22 is stored. The controller 28 drives the arm 22 so that the tip of the arm 22 is positioned at the coordinate. The imager 26 moves conjunctively with the torch 21. The coordinate of the tip of the arm 22 is used as the imaging position. Or, the imager 26 may be driven by a drive system other than the arm 22. In such a case, the position (the coordinate) of the imager 26 in the other drive system may be used as the imaging position. Or, the position of the electrode 21a tip in the first image or the position of the weld pool 111 in the first image may be calculated, and one of these positions may be used as the imaging position.

For example, when the defect is determined not to exist in the second determination, the processing device 10 determines the quality to be "good" (a first quality) at the imaging position. When the defect is determined to exist in the second determination and the defect is not confirmed in the third determination, the processing device 10 determines the quality to be "good" at the imaging position. When the defect is confirmed in the third determination, the processing device 10 determines the quality to be "defective" (a third quality) at the imaging position. When the second detection result is determined to be inappropriate in the first determination, the processing device 10 determines the quality to be "invalid" (a second quality) at the imaging position. The processing device 10 may generate and output quality data that includes multiple positions and the quality for each position.

The first to third thresholds are preset by the user. The first threshold and the second threshold may be automatically set based on the size of the first image. The third threshold may be automatically set based on the interval between imaging the first image.

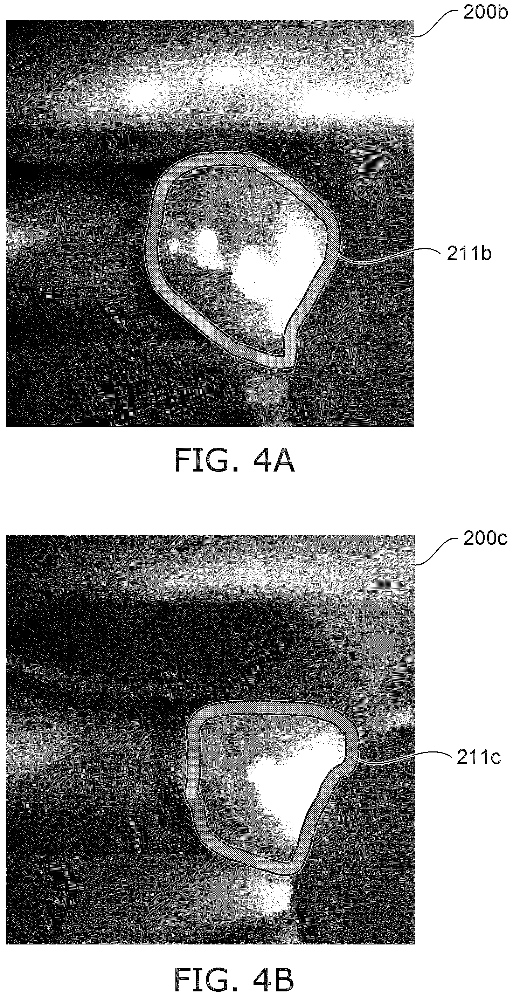

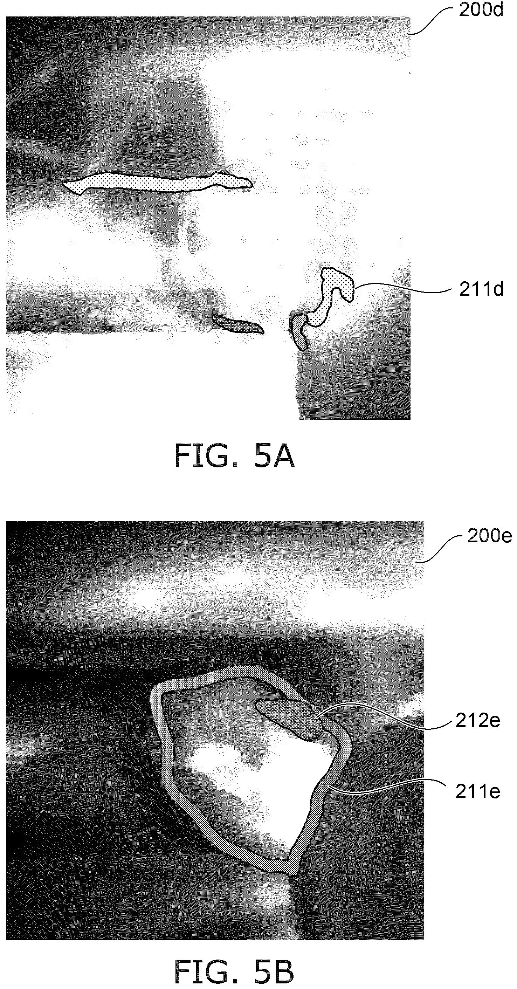

FIGS. 4A and 4B and FIGS. 5A and 5B are schematic views illustrating output examples of the first model.

In FIGS. 4A and 4B and FIGS. 5A and 5B, the first feature 211 is illustrated by a line segment marked with dots. In FIG. 5B, the second feature 212 is illustrated by a line segment marked with dots. The pixel values increase as the density of the dots increases.

In the examples of FIGS. 4A and 4B, the weld pool is clearly visible in the first image input to the first model. Therefore, in output results 200b and 200c illustrated in FIGS. 4A and 4B, the line segment of a first feature 211b and the line segment of a first feature 211c that are detected are sufficiently long. In other words, the area of the first feature 211b and the area of the first feature 211c are sufficiently large. The second detection result is determined to be appropriate in the first determination based on the output result of FIG. 4A and in the first determination based on the output result of FIG. 4B.

When the second detection result is determined to be appropriate, the existence/nonexistence of the defect in the first image input to the first model is determined based on the second detection result. The second feature 212 of the defect is not detected in the output results 200b and 200c of FIGS. 4A and 4B. Therefore, the defect is determined not to exist in the first image. The processing device 10 determines the quality to be "good" at these imaging positions of the first image.

In an output result 200d illustrated in FIG. 5A, blown out highlights occurs in a portion of the image input to the first model. Therefore, multiple divided line segments are detected as a first feature 211d. Also, the area of the first feature 211d is small compared to the examples of FIGS. 4A and 4B. For example, the second detection result is determined to be inappropriate in the first determination based on the output result 200d of FIG. 5A.

In an output result 200e illustrated in FIG. 5B, similarly to the examples of FIGS. 4A and 4B, the area of a first feature 211e is sufficiently large. Therefore, the second detection result is determined to be appropriate. A second feature 212e is detected in the example of FIG. 5B. For example, the defect is determined to exist based on the second feature 212e in the second determination. The existence of the defect is confirmed in the third determination when the number of times that the defect is consecutively determined to exist is not less than the third threshold.

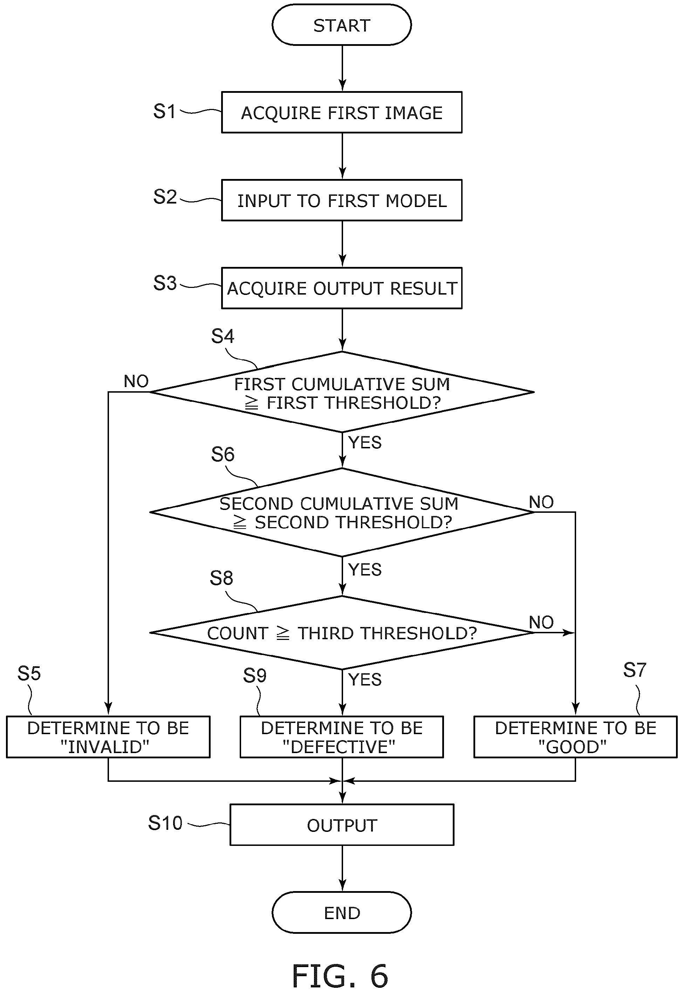

FIG. 6 is a flowchart illustrating processing according to the processing device according to the embodiment.

The processing device 10 acquires the first image (step S1). The processing device 10 inputs the first image to the first model (step S2). The processing device 10 acquires the output result from the first model (step S3). The processing device 10 determines whether or not the first cumulative sum is not less than the first threshold in the first determination (step S4). When the first cumulative sum is less than the first threshold, the processing device 10 determines the quality to be "invalid" (step S5).

When the first cumulative sum is not less than the first threshold, the processing device 10 determines whether or not the second cumulative sum is not less than the second threshold in the second determination (step S6). When the second cumulative sum is less than the second threshold, the processing device 10 determines the quality to be "good" (step S7). When the second cumulative sum is not less than the second threshold, the processing device 10 determines whether or not the number of times that the defect is consecutively determined to exist in the third determination is not less than the third threshold (step S8). When the count is less than the third threshold, the processing device 10 does not confirm the existence of the defect and determines the quality to be "good" (step S7). When the count is not less than the third threshold, the processing device 10 confirms the existence of the defect and determines the quality to be "defective" (step S9). The processing device 10 stores the quality and the results of the first to third determinations in the memory device 30 (step S10).

Advantages of embodiments will now be described.

Conventionally, attempts have been made to extract a feature from the image that is imaged when welding and estimate the existence of the defect by using the feature. However, when such a method is used, it is necessary to prepare a database of the relationship between the defect and the extracted feature. For example, the feature that is extracted may change each time the object of the welding, the welding parameters, or the imaging conditions change; therefore, it is necessary to update the database.

For this first problem, according to the embodiment, the first model that detects the weld pool and the defect according to the input of the welding image is used. In other words, the defect is directly detected from the image that is imaged when welding. By using the first model, a database of the relationship between the feature and the defect is unnecessary. The convenience of the user can be improved. It is unnecessary for the user to perform the conventional complex defect detection based on the relationship between the feature and the defect.

On the other hand, when the defect is directly detected, there is a possibility that the reliability may degrade compared to when the defect is detected based on the feature. For example, generally, the defect is small compared to the weld pool, etc.; therefore, there are cases where the defect is not displayed in the welding image due to blown out highlights or blocked up shadows. In such a case, although there is a possibility that the defect can be detected based on the feature, it is difficult to directly detect the defect. Then, erroneous quality data is generated when the defect is confirmed not to exist in such a case.

For the second problem, according to the embodiment, the appropriateness of the second detection result is determined by using the first detection result. For example, when the second detection result is inappropriate, the processing device 10 does not employ the second detection result. The reliability of the determination result relating to the defect can be increased thereby. The reliability of the quality data that includes the determination result relating to the defect can be increased.

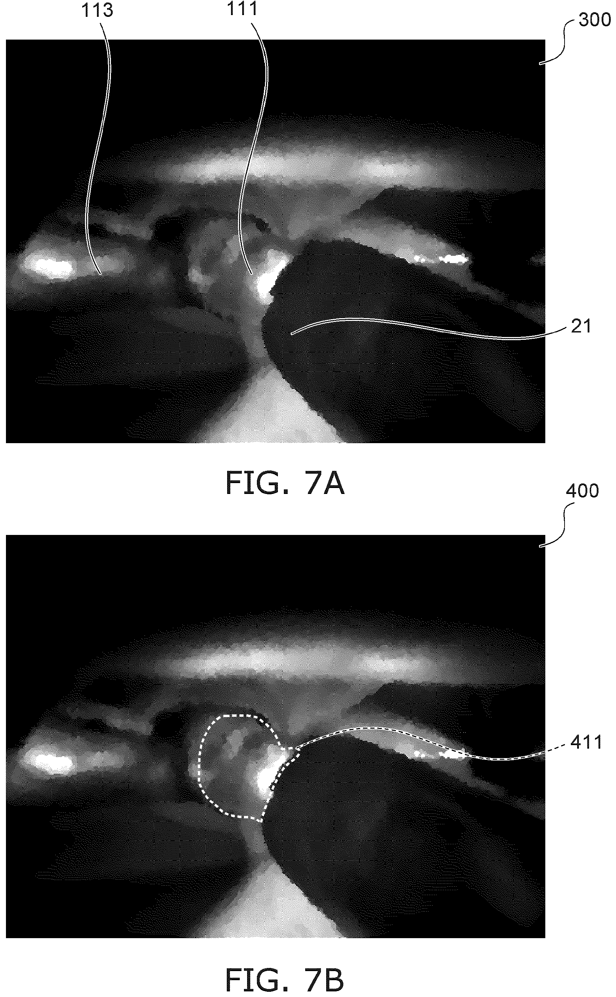

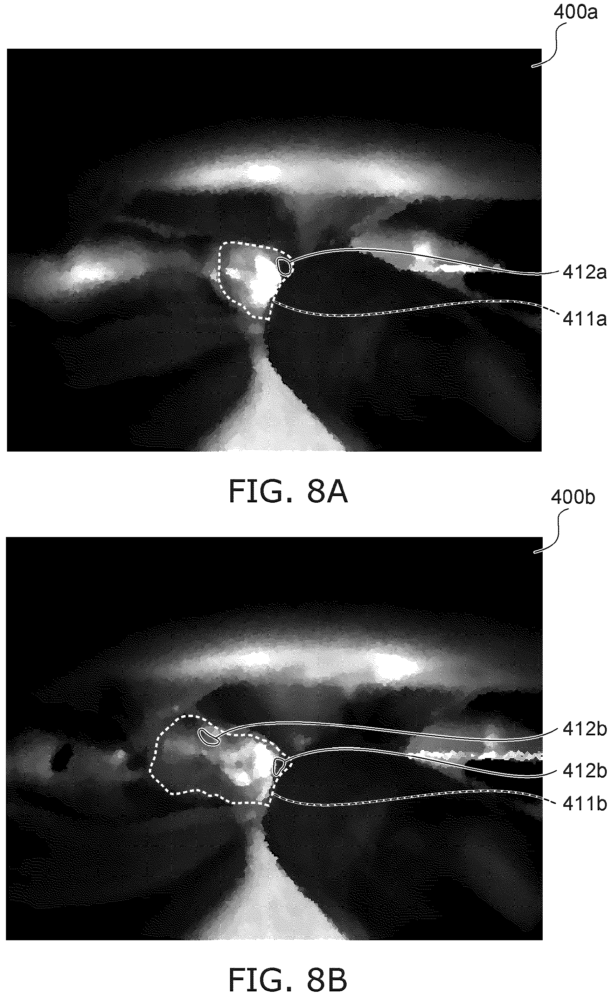

FIGS. 7A and 7B and FIGS. 8A and 8B are schematic views illustrating images used to train the first model.

The training of the first model will now be described. The first model is trained using multiple sets of teaching data. The sets of teaching data each include an input image and a teaching image.

FIG. 7A illustrates an input image 300. The torch 21, the weld pool 111, the bead 113, etc., are visible in the input image 300. FIG. 7B illustrates a teaching image 400. The teaching image 400 includes a line segment 411 that indicates the outer edge of the weld pool 111. For example, the pixel values of the line segment 411 are set to (R, G, B) = (255, 0, 0).

In the input image of FIG. 7A, the defect does not exist in the weld pool 111 interior. Therefore, the defect is not taught in the teaching image of FIG. 7B. Even when the defect exists in the weld pool 111 interior, the defect may not be taught when the area of the defect is small compared to the area of the weld pool. For example, the defect is not taught when the area of the defect is less than 10% of the area of the weld pool. This is because the likelihood of a small defect being repaired is high. Also, in the example, a defect that is outside the weld pool 111 is not taught. For example, the first model is trained not to detect defects outside the weld pool 111.

By using the input image 300 as input data and the teaching image 400 as teaching data, the first model is trained to output the teaching image based on the input image.

FIGS. 8A and 8B illustrate other teaching images. A teaching image 400a of FIG. 8A includes a line segment 411a indicating the outer edge of the weld pool and a line segment 412a indicating the outer edge of the defect. A teaching image 400b of FIG. 8B includes a line segment 411b indicating the outer edge of the weld pool and a line segment 412b indicating the outer edge of the defect. Multiple defects exist in the example of FIG. 8B. Therefore, multiple line segments 412b are shown. The first model is trained using the teaching images shown in FIGS. 8A and 8B.

### Modification

The processing device 10 may perform feedback to the welding device 20 based on the determination relating to the defect. The processing device 10 acquires the welding parameters when welding. When the existence of the defect is confirmed in the third determination, the processing device 10 selects a welding parameter to be modified. The processing device 10 modifies the selected welding parameter. The processing device 10 transmits the modified welding parameter to the controller 28. When the processing device 10 does not confirm the existence of the defect in the third determination, the processing device 10 does not modify the welding parameters. The processing device 10 transmits the original welding parameters to the controller 28.

For example, the welding is performed by a heat source moving along the first direction. The welding parameter that is modified includes at least one selected from the group consisting of the speed of the heat source in the first direction, the position of the heat source in the second direction perpendicular to the first direction, and the output of the heat source. The modification of the speed of the heat source in the first direction includes reducing the speed in the travel direction of the heat source, stopping the travel of the heat source, or moving the heat source in a direction opposite to the travel direction.

When the welding is arc welding, the welding parameter that is modified includes at least one selected from the group consisting of the speed of the torch 21 in the first direction, the position of the torch 21 in the second direction perpendicular to the first direction, the current supplied to the torch 21, the voltage supplied to the torch 21, and the supply rate of the wire 25.

When the welding is laser welding, the welding parameter that is modified includes at least one selected from the group consisting of the speed of laser light in the first direction, the position of the laser light in the second direction perpendicular to the first direction, and the intensity of the laser light.

By modifying the welding parameter, molten metal can be easily supplied to the position of the defect; and the likelihood of the defect being repaired can be improved.

The processing device 10 may calculate the position at which the defect is detected and may modify the welding parameter according to the position. For example, the processing device 10 modifies the welding parameter so that the heat source approaches the defect. The heat source moves in the opposite direction or the second direction based on the modified welding parameter. The processing device 10 may increase the output of the heat source as the distance increases.

The likelihood of the defect being repaired can be further improved thereby.

After the welding parameter is modified, the processing device 10 may determine whether or not the defect is repaired. For example, the first image is acquired after performing the welding based on the modified welding parameter. The processing device 10 performs the determination processing based on the output result of the first model for the first image and determines whether or not the existence of the defect is reconfirmed at the calculated position. When the existence of the defect is not confirmed at the calculated position, the processing device 10 determines the defect to be repaired. When the defect is repaired, the processing device 10 determines the quality to be "acceptable" (a fourth quality) at the imaging position. When the defect is not repaired, the processing device 10 determines the quality to be "defective" for the position of the defect.

When the existence of the defect is confirmed, the processing device 10 may determine whether or not the defect is repairable. When the defect is too large, the likelihood that the repair cannot be performed by modifying the welding parameter is high. If the welding parameter is modified even though the repair cannot be performed, there is a possibility that other spots that have good quality may be unfavorably affected. Also, the time necessary for welding is uselessly increased.

For example, the possibility of the repair of the defect is determined based on the size of the second feature. The size of the second feature is determined based on at least one of the first length in the first direction of the second feature or the second length in the second direction of the second feature. For example, the first length or the second length is used as the size of the second feature. The larger value of the first length or the second length may be used as the size of the second feature. The product of the first length and the second length may be used as the size of the second feature. When the defect is circular or elliptical, the product of 0.5 times the first length, 0.5 times the second length, and *π* may be used as the size of the second feature.

The processing device 10 compares the size of the second feature to a preset fourth threshold. When the size of the second feature is less than the fourth threshold, the processing device 10 modifies the welding parameter. When the size of the second feature is not less than the fourth threshold, the processing device 10 determines the defect to be unrepairable. The processing device 10 continues the welding by using the same welding parameters as before confirming the defect without modifying the welding parameter.

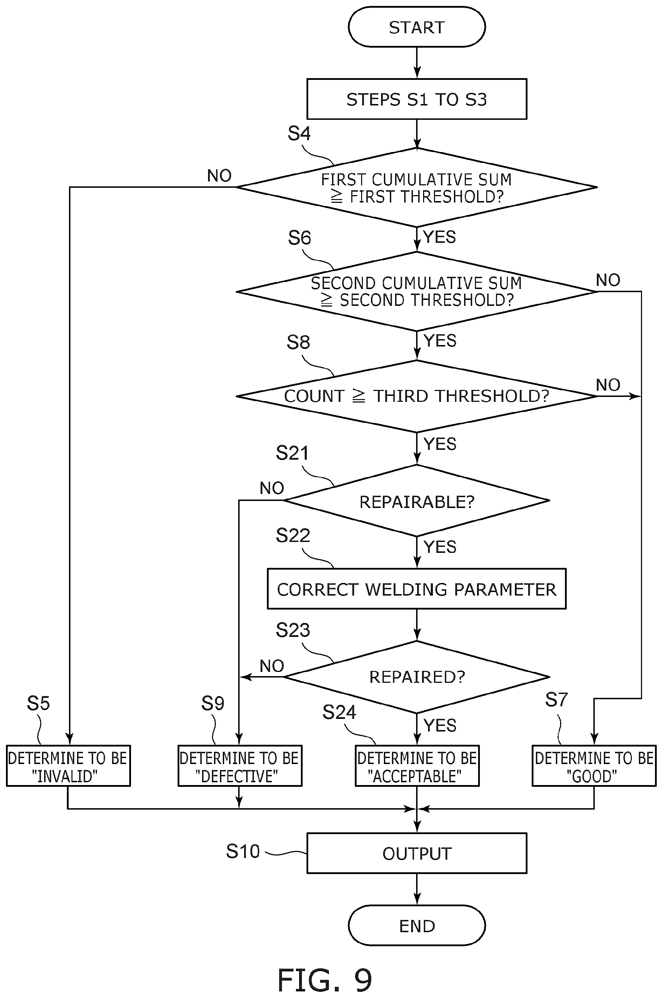

FIG. 9 is a flowchart illustrating the processing according to the processing device according to the modification of the embodiment.

The processing device 10 performs steps S1 to S9 similarly to the flowchart illustrated in FIG. 6. The processing device 10 determines whether or not the defect is repairable when the count is not less than the third threshold in step S8 (step S21). When the defect is unrepairable, the processing device 10 determines the quality to be "defective" without modifying the welding parameter (step S9). When the defect is repairable, the processing device 10 modifies the welding parameter (step S22). Thereby, welding based on the modified welding parameter is performed by the welding device 20.

The processing device 10 determines whether or not the confirmed defect is repaired (step S23). When the defect is repaired, the processing device 10 determines the quality to be "acceptable" (step S24). When the defect is not repaired, the processing device 10 determines the quality to be "defective" (step S9).

According to the modification, the likelihood of the defect being repaired by modifying the welding parameter can be improved. The quality of the joined body that is made can be improved thereby.

In the example described above, the torch 21 is held by the arm 22. The torch 21 may be gripped by a worker performing the welding. In such a case, the processing device 10 may output data of the modification of the welding parameter to the worker.

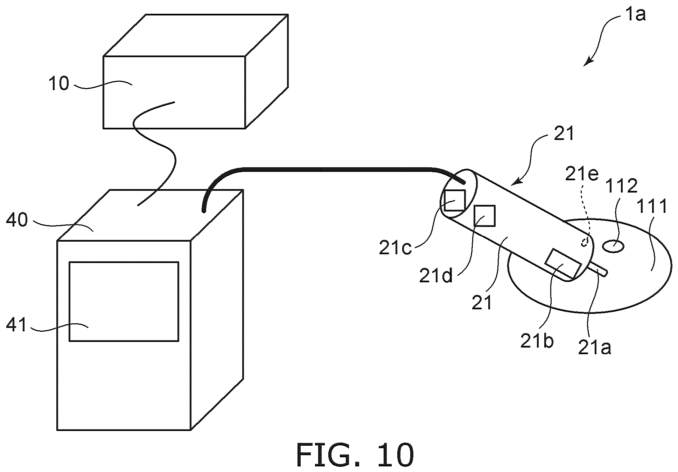

FIG. 10 is a schematic view illustrating the configuration of another welding system that includes the processing device according to the embodiment.

The welding system 1a illustrated in FIG. 10 includes the processing device 10, the torch 21, and a control device 40. The torch 21 includes the electrode 21a, an imager 21b, a position sensor 21c, a tilt sensor 21d, and a gas supply port 21e.

The user welds by gripping the torch 21. The imager 21b images the weld pool when welding. The position sensor 21c detects the position of the torch 21. The tilt sensor 21d detects the tilt of the torch 21. For example, the position sensor 21c is an optical position sensor or an ultrasonic position sensor. The tilt sensor 21d is a gyro sensor or an acceleration sensor. An inert gas is forced from the gas supply port 21e toward the tip of the electrode 21a.

The control device 40 functions as the electrical power supplier 23 of the welding device 20, the gas supplier 24, the controller 28, and the memory device 30 illustrated in FIG. 1. The control device 40 includes a power supply that supplies electrical power to the processing device 10 and the torch 21. In the example, the control device 40 further includes a display device 41.

The processing device 10 performs processing by using the first image that is imaged by the imager 21b. The processing device 10 transmits the data obtained by the processing to the control device 40. The control device 40 causes the display device 41 to display the data.

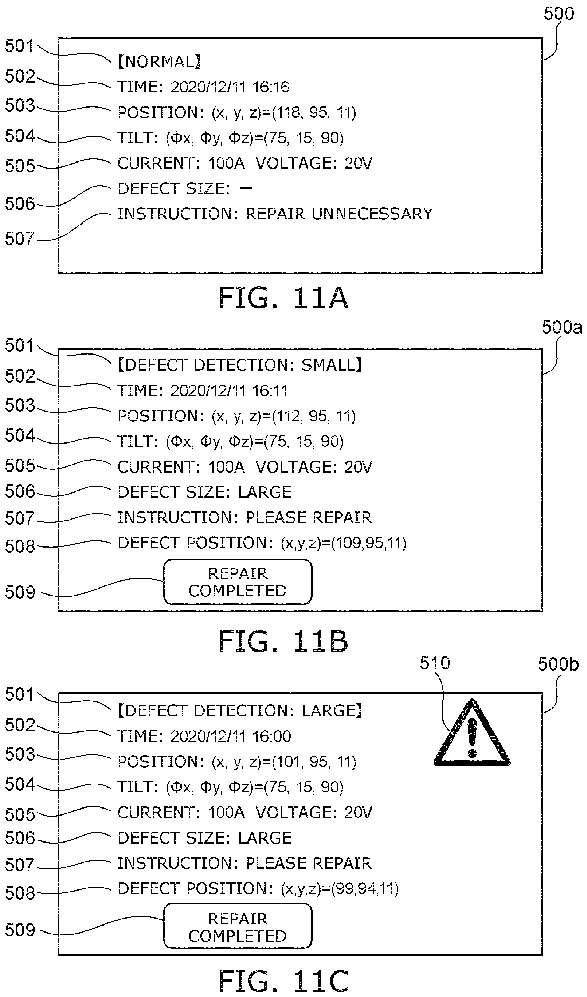

FIGS. 11A to 11C are schematic views illustrating display examples of the processing device according to the modification of the embodiment.

FIG. 11A illustrates a display example when the defect is determined not to exist in the second determination. A determination result 501 that relates to the defect, a time 502, a position 503 of the torch 21, a tilt 504 of the torch 21, welding parameters 505, data 506 that relates to the defect, and an instruction 507 to the user are displayed in a screen 500.

FIGS. 11B and 11C illustrate display examples when the existence of the defect is confirmed in the third determination. The determination result 501 shows the detection of the defect and the size of the defect in screens 500a and 500b. The user is instructed to repair the defect in the instruction 507. Also, a position 508 of the defect is displayed in the screens 500a and 500b.

The processing device 10 may determine the size of the defect based on the size of the second feature. The processing device 10 may output the determined size of the defect as illustrated in FIGS. 11B and 11C. For example, the processing device 10 determines the size of the defect by comparing the size of the second feature to one or more preset thresholds.

When the existence of the defect is confirmed, the processing device 10 transmits the instruction of the repair of the defect to the control device 40 and modifies the welding parameter. The processing device 10 may calculate the position of the tip of the torch 21 based on the detection results of the position sensor 21c and the tilt sensor 21d. The processing device 10 may modify the welding parameter when the position of the tip of the torch 21 approaches the position of the defect. The control device 40 automatically modifies the welding parameter based on the determination result of the processing device 10.

A button 509 is displayed in the screens 500a and 500b. For example, the display device 41 is a touch panel. The user touches the button 509 when the repair of the defect is completed. The user may use a mouse or the like to operate a pointer and click the button 509.

An icon 510 may be displayed to get the attention of the user according to the size of the defect. In the example, the icon 510 is displayed when the size of the defect is large.

An example that relates mainly to arc welding is described above. The invention according to embodiments also is similarly applicable to laser welding. The weld pool and the defect are similarly imaged in the image that is imaged in the laser welding. The first model is trained to detect the weld pool and the defect from the image of the laser welding. The processing device 10 performs the first to third determinations by using the output result of the first model.

An example in which the first model detects the weld pool is described above. The first model may detect another welding element. The welding element is an element that is unique to welding and exists when welding. The welding element is at least one selected from the group consisting of a weld pool, a groove, a wire, a torch, and a bead. Even when the first model detects a welding element other than the weld pool, the processing described above can be performed using the first feature that is the detection result of the welding element.

It is favorable for the first model to detect the weld pool. For example, there are cases where the wire and the torch are visible at positions that are separated from the defect. There are cases where the wire or the torch is clearly visible even when blown out highlights of the defect occurs in the welding image due to electric discharge. In such a case, erroneous quality is recorded when no defect is determined. Because the defect occurs in the weld pool, the likelihood of the defect being unclear is high when the weld pool is unclear. By detecting the weld pool, the quality can be determined with higher accuracy. The reliability of the quality data can be increased.

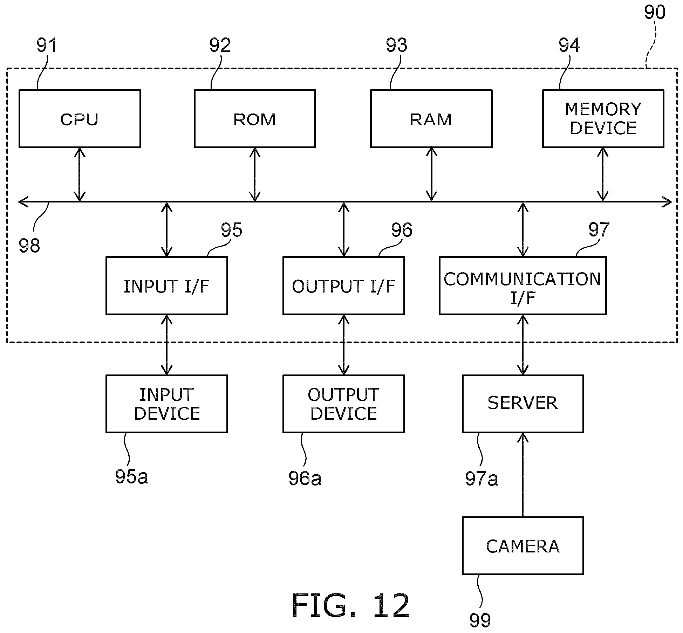

FIG. 12 is a schematic view illustrating a hardware configuration.

The processing device 10 can be realized by the hardware configuration illustrated in FIG. 12. A computer 90 illustrated in FIG. 12 includes a CPU 91, ROM 92, RAM 93, a memory device 94, an input interface 95, an output interface 96, and a communication interface 97.

The ROM 92 stores programs that control the operations of the computer 90. A program that is necessary for causing the computer 90 to realize the processing described above is stored in the ROM 92. The RAM 93 functions as a memory region into which the programs stored in the ROM 92 are loaded.

The CPU 91 includes a processing circuit. The CPU 91 uses the RAM 93 as work memory to execute the programs stored in at least one of the ROM 92 or the memory device 94. When executing the program, the CPU 91 performs various processing by controlling configurations via a system bus 98.

The memory device 94 stores data necessary for executing the programs and data obtained by executing the programs.

The input interface (I/F) 95 connects the computer 90 and an input device 95a. The input I/F 95 is, for example, a serial bus interface such as USB, etc. The CPU 91 can read various data from the input device 95a via the input I/F 95.

The output interface (I/F) 96 connects the computer 90 and an output device 96a. The output I/F 96 is, for example, an image output interface such as Digital Visual Interface (DVI), High-Definition Multimedia Interface (HDMI (registered trademark)), etc. The CPU 91 can transmit the data to the output device 96a via the output I/F 96 and can cause the output device 96a to display the image.

The communication interface (I/F) 97 connects the computer 90 and a server 97a that is outside the computer 90. The communication I/F 97 is, for example, a network card such as a LAN card, etc. The CPU 91 can read various data from the server 97a via the communication I/F 97. A camera 99 images the weld pool and the defect when welding and stores the image in the server 97a.

The memory device 94 includes not less than one selected from a hard disk drive (HDD) and a solid state drive (SSD). The input device 95a includes not less than one selected from a mouse, a keyboard, a microphone (audio input), and a touchpad. The output device 96a includes not less than one selected from a monitor and a projector. A device such as a touch panel that functions as both the input device 95a and the output device 96a may be used.

The computer 90 functions as the processing device 10. The memory device 94 and the server 97a function as the memory device 30. The camera 99 functions as the imager 26 included in the welding device 20. The output device 96a functions as the display device 41.

By using the processing device, the welding system, or the processing method described above, the convenience of the user relating to the defect detection can be improved, and the reliability of the determination result relating to the defect can be increased. Similar effects also can be obtained by using a program to cause a computer to operate as the processing device.

The processing of the various data described above may be recorded, as a program that can be executed by a computer, in a magnetic disk (a flexible disk, a hard disk, etc.), an optical disk (CD-ROM, CD-R, CD-RW, DVD-ROM, DVD±R, DVD±RW, etc.), semiconductor memory, or a recording medium (non-transitory computer-readable storage medium) that can be read by another nontemporary computer.

For example, information that is recorded in the recording medium can be read by a computer (or an embedded system). The recording format (the storage format) of the recording medium is arbitrary. For example, the computer reads the program from the recording medium and causes the CPU to execute the instructions recited in the program based on the program. In the computer, the acquisition (or the reading) of the program may be performed via a network.

While certain embodiments have been described, these embodiments have been presented by way of example only, and are not intended to limit the scope of the present invention as defined in the appended claims.

## Claims

1. A processing device (10) in combination with a memory device (30), an imager (26), and a model,
the processing device (10) being configured to access the memory device (30), acquire a first image by the imager (26), the first image being imaged when welding,
inputting this first image to the model,
acquire from the model an image including a first detection result including a first feature indicating the welding element, and a second detection result including a second feature indicating the defect,
calculate a first cumulative sum using pixel values of pixels included in the first feature, by summing the red luminance of the first feature,
compare the first cumulative sum to a first threshold,
determine that the second detection result is appropriate, when the first cumulative sum is not less than the first threshold, and
determine that the second detection result is inappropriate, when the first cumulative sum is less than the first threshold,
calculate a second cumulative sum using pixel values of pixels included in the second feature, by summing the red luminance and the green luminance of the first feature,
compare the second cumulative sum to a second threshold,
wherein an existence/non-existence of the defect in the first image is determined based on the second detection result and the model being configured to determine, based on a first image received from the processing device (10), an image including a first detection result including a first feature indicating a welding element, wherein the welding element is a weld pool, and a second detection result including a second feature indicating the defect.

2. The processing device (10) according to claim 1, wherein
a quality is determined to be a first quality for an imaging position of the first image in which the defect is determined not to exist, and
a quality is determined to be a second quality for an imaging position of the first image used as a basis of the second detection result determined to be inappropriate.

3. The processing device (10) according to claim 1, wherein
a plurality of the first images is sequentially input to the first model,
a plurality of the first detection results and a plurality of the second detection results are acquired, and
appropriatenesses of the plurality of second detection results are determined respectively using the plurality of first detection results.

4. The processing device (10) according to claim 3, wherein
an existence/nonexistence of the defect in each of the plurality of first images is determined based on the second detection result determined to be appropriate, and
the existence of the defect is confirmed when a number of times of consecutively determining the defect to exist is not less than a third threshold.

5. The processing device (10) according to claim 4, wherein
a quality is determined to be a first quality for a position of the first image in which the defect is determined not to exist,
a quality is determined to be a second quality for a position of the first image used as a basis of the second detection result determined to be inappropriate, and
a quality is determined to be a third quality for a position of the first image in which the existence of the defect is confirmed.

6. The processing device (10) according to claim 4 or 5, wherein
a position of the confirmed defect is calculated.

7. The processing device (10) according to any one of claims 4 to 6, wherein
a welding parameter is modified based on a confirmation result of the defect.

8. The processing device (10) according to claim 7, wherein
whether or not the confirmed defect is repaired by welding based on the modified welding parameter is determined.

9. The processing device (10) according to claim 7 or 8, wherein
the welding is performed by moving a heat source along a first direction, and
the modified welding parameter is at least one selected from the group consisting of a speed of the heat source in the first direction, a position of the heat source in a second direction perpendicular to the first direction, and an output of the heat source.

10. The processing device (10) according to any one of claims 1 to 9, wherein
quality data is generated using a determination result of the appropriateness of the second detection result, and
the quality data includes a plurality of positions of a welding object, and a quality for each of the plurality of positions.

11. The processing device (10) according to claim 1, wherein
the processing device (10) is configured to modify a welding parameter according to a position of the defect calculated using the second detection result.

12. The processing device (10) according to claim 11, wherein
the modified welding parameter includes at least one selected from the group consisting of a speed of the heat source in the first direction, a position of the heat source in a second direction perpendicular to the first direction, and an output of the heat source.

13. A welding system (1), comprising:
the processing device (10) according to any one of claims 1 to 12; and
a welding device (20) performing at least the welding.

14. A processing method, comprising:
accessing a memory device (30);
acquiring a first image, the first image being imaged when welding;
inputting this first image to a model;
acquiring from the model an image including a first detection result including a first feature indicating the welding element, and a second detection result including a second feature indicating the defect,
calculating a first cumulative sum using pixel values of pixels included in the first feature, by summing the red luminance of the first feature;
comparing the first cumulative sum to a first threshold,
determining that the second detection result is appropriate, when the first cumulative sum is not less than the first threshold, and
determining that the second detection result is inappropriate, when the first cumulative sum is less than the first threshold,
calculating a second cumulative sum using pixel values of pixels included in the second feature, by summing the red luminance and the green luminance of the first feature;
comparing the second cumulative sum to a second threshold,
wherein an existence/non-existence of the defect in the first image is determined based on the second detection result and the model being configured to determine, based on a received first image, an image including a first detection result including a first feature indicating a welding element, wherein the welding element is a weld pool, and a second detection result including a second feature indicating the defect.

15. A storage medium storing a program, the program comprising instructions to cause the device of claim 1 to execute the steps of the method of claim 14.

## Patentansprüche

1. Verarbeitungsvorrichtung (10) in Kombination mit einer Speichervorrichtung (30), einem Bildgeber (26) und einem Modell,
wobei die Verarbeitungsvorrichtung (10) konfiguriert ist zum
Zugreifen auf die Speichervorrichtung (30),
Erfassen eines ersten Bildes durch den Bildgeber (26), wobei das erste Bild beim Schweißen aufgenommen wird,
Eingeben dieses ersten Bildes in das Modell,
Erfassen eines Bildes von dem Modell, das ein erstes Detektionsergebnis umfassend ein erstes Merkmal, das das Schweißelement angibt, und ein zweites Detektionsergebnis umfassend ein zweites Merkmal, das den Defekt angibt, umfasst,
Berechnen einer ersten kumulativen Summe unter Verwendung von Pixelwerten von in dem ersten Merkmal enthaltenen Pixeln durch Summieren der Rot-Leuchtdichte des ersten Merkmals,
Vergleichen der ersten kumulativen Summe mit einem ersten Schwellenwert,
Bestimmen, dass das zweite Detektionsergebnis angemessen ist, wenn die erste kumulative Summe nicht kleiner als der erste Schwellenwert ist, und
Bestimmen, dass das zweite Detektionsergebnis unangemessen ist, wenn die erste kumulative Summe kleiner als der erste Schwellenwert ist,
Berechnen einer zweiten kumulativen Summe unter Verwendung von Pixelwerten von in dem zweiten Merkmal enthaltenen Pixeln durch Summieren der Rot-Leuchtdichte und der Grün-Leuchtdichte des ersten Merkmals,
Vergleichen der zweiten kumulativen Summe mit einem zweiten Schwellenwert,
wobei ein Vorhandensein/Nichtvorhandensein des Defekts in dem ersten Bild basierend auf dem zweiten Detektionsergebnis bestimmt wird und das Modell konfiguriert ist, basierend auf einem von der Verarbeitungsvorrichtung (10) empfangenen ersten Bild ein Bild zu bestimmen, das ein erstes Detektionsergebnis umfassend ein erstes Merkmal, das ein Schweißelement angibt, wobei das Schweißelement ein Schmelzbad ist, und ein zweites Detektionsergebnis umfassend ein zweites Merkmal, das den Defekt angibt, umfasst.

2. Verarbeitungsvorrichtung (10) nach Anspruch 1, wobei
eine Qualität als erste Qualität für eine Aufnahmeposition des ersten Bildes bestimmt wird, in der bestimmt wird, dass der Defekt nicht vorhanden ist, und
eine Qualität als zweite Qualität für eine Aufnahmeposition des ersten Bildes bestimmt wird, das als Grundlage des als unangemessen bestimmten zweiten Detektionsergebnisses verwendet wird.

3. Verarbeitungsvorrichtung (10) nach Anspruch 1, wobei
eine Vielzahl von ersten Bildern sequentiell in das erste Modell eingegeben werden,
eine Vielzahl von ersten Detektionsergebnissen und eine Vielzahl von zweiten Detektionsergebnissen erfasst werden, und
Angemessenheiten der Vielzahl von zweiten Detektionsergebnissen jeweils unter Verwendung der Vielzahl von ersten Detektionsergebnissen bestimmt werden.

4. Verarbeitungsvorrichtung (10) nach Anspruch 3, wobei
ein Vorhandensein/Nichtvorhandensein des Defekts in jedem der Vielzahl von ersten Bildern basierend auf dem als angemessen bestimmten zweiten Detektionsergebnis bestimmt wird, und
das Vorhandensein des Defekts bestätigt wird, wenn eine Anzahl aufeinanderfolgender Bestimmungen, dass der Defekt vorhanden ist, nicht kleiner als ein dritter Schwellenwert ist.

5. Verarbeitungsvorrichtung (10) nach Anspruch 4, wobei
eine Qualität als erste Qualität für eine Position des ersten Bildes bestimmt wird, in der bestimmt wird, dass der Defekt nicht vorhanden ist,
eine Qualität als zweite Qualität für eine Position des ersten Bildes bestimmt wird, das als Grundlage des als unangemessen bestimmten zweiten Detektionsergebnisses verwendet wird, und
eine Qualität als dritte Qualität für eine Position des ersten Bildes bestimmt wird, in der das Vorhandensein des Defekts bestätigt wird.

6. Verarbeitungsvorrichtung (10) nach Anspruch 4 oder 5, wobei
eine Position des bestätigten Defekts berechnet wird.

7. Verarbeitungsvorrichtung (10) nach einem der Ansprüche 4 bis 6, wobei
ein Schweißparameter basierend auf einem Bestätigungsergebnis des Defekts modifiziert wird.

8. Verarbeitungsvorrichtung (10) nach Anspruch 7, wobei
bestimmt wird, ob der bestätigte Defekt durch Schweißen basierend auf dem modifizierten Schweißparameter repariert wird oder nicht.

9. Verarbeitungsvorrichtung (10) nach Anspruch 7 oder 8, wobei
das Schweißen durch Bewegen einer Wärmequelle entlang einer ersten Richtung durchgeführt wird, und
der modifizierte Schweißparameter mindestens ein aus der Gruppe bestehend aus einer Geschwindigkeit der Wärmequelle in der ersten Richtung, einer Position der Wärmequelle in einer zweiten Richtung senkrecht zur ersten Richtung und einer Ausgangsleistung der Wärmequelle ausgewählter Parameter ist.

10. Verarbeitungsvorrichtung (10) nach einem der Ansprüche 1 bis 9, wobei
Qualitätsdaten unter Verwendung eines Bestimmungsergebnisses der Angemessenheit des zweiten Detektionsergebnisses erzeugt werden, und
die Qualitätsdaten eine Vielzahl von Positionen eines Schweißobjekts und eine Qualität für jede der Vielzahl von Positionen enthalten.

11. Verarbeitungsvorrichtung (10) nach Anspruch 1, wobei
die Verarbeitungsvorrichtung (10) konfiguriert ist, einen Schweißparameter entsprechend einer Position des Defekts zu modifizieren, die unter Verwendung des zweiten Detektionsergebnisses berechnet wird.

12. Verarbeitungsvorrichtung (10) nach Anspruch 11, wobei
der modifizierte Schweißparameter mindestens einen aus der Gruppe bestehend aus einer Geschwindigkeit der Wärmequelle in der ersten Richtung, einer Position der Wärmequelle in einer zweiten Richtung senkrecht zur ersten Richtung und einer Ausgangsleistung der Wärmequelle ausgewählten Parameter enthält.

13. Schweißsystem (1), umfassend:
die Verarbeitungsvorrichtung (10) nach einem der Ansprüche 1 bis 12; und
eine Schweißvorrichtung (20), die mindestens das Schweißen durchführt.

14. Verarbeitungsverfahren, umfassend:
Zugreifen auf eine Speichervorrichtung (30);
Erfassen eines ersten Bildes, wobei das erste Bild beim Schweißen aufgenommen wird;
Eingeben dieses ersten Bildes in ein Modell;
Erfassen eines Bildes von dem Modell, das ein erstes Detektionsergebnis umfassend ein erstes Merkmal, das das Schweißelement angibt, und ein zweites Detektionsergebnis umfassend ein zweites Merkmal, das den Defekt angibt, umfasst, Berechnen einer ersten kumulativen Summe unter Verwendung von Pixelwerten von in dem ersten Merkmal enthaltenen Pixeln durch Summieren der Rot-Leuchtdichte des ersten Merkmals;
Vergleichen der ersten kumulativen Summe mit einem ersten Schwellenwert,
Bestimmen, dass das zweite Detektionsergebnis angemessen ist, wenn die erste kumulative Summe nicht kleiner als der erste Schwellenwert ist, und
Bestimmen, dass das zweite Detektionsergebnis unangemessen ist, wenn die erste kumulative Summe kleiner als der erste Schwellenwert ist,
Berechnen einer zweiten kumulativen Summe unter Verwendung von Pixelwerten von in dem zweiten Merkmal enthaltenen Pixeln durch Summieren der Rot-Leuchtdichte und der Grün-Leuchtdichte des ersten Merkmals;
Vergleichen der zweiten kumulativen Summe mit einem zweiten Schwellenwert,
wobei ein Vorhandensein/Nichtvorhandensein des Defekts in dem ersten Bild basierend auf dem zweiten Detektionsergebnis bestimmt wird und das Modell konfiguriert ist, basierend auf einem empfangenen ersten Bild ein Bild zu bestimmen, das ein erstes Detektionsergebnis umfassend ein erstes Merkmal, das ein Schweißelement angibt, wobei das Schweißelement ein Schmelzbad ist, und ein zweites Detektionsergebnis umfassend ein zweites Merkmal, das den Defekt angibt, umfasst.

15. Speichermedium, das ein Programm speichert,
wobei das Programm Anweisungen umfasst, um die Vorrichtung nach Anspruch 1 zu veranlassen, die Schritte des Verfahrens nach Anspruch 14 auszuführen.

## Revendications

1. Dispositif de traitement (10) associé à un dispositif de mémoire (30), à un dispositif d'imagerie (26) et à un modèle,
le dispositif de traitement (10) étant configuré pour accéder au dispositif de mémoire (30),
acquérir une première image à l'aide du dispositif d'imagerie (26), la première image étant capturée lors d'un soudage,
introduire cette première image dans le modèle, acquérir à partir du modèle une image comprenant un premier résultat de détection comportant une première caractéristique indiquant l'élément de soudage, et un deuxième résultat de détection comportant une deuxième caractéristique indiquant le défaut,
calculer une première somme cumulative en utilisant des valeurs de pixel de pixels compris dans la première caractéristique, en additionnant la luminance rouge de la première caractéristique,
comparer la première somme cumulative à un premier seuil,
déterminer que le deuxième résultat de détection est adéquat, lorsque la première somme cumulative n'est pas inférieure au premier seuil, et
déterminer que le deuxième résultat de détection est inadéquat, lorsque la première somme cumulative est inférieure au premier seuil,
calculer une deuxième somme cumulative en utilisant des valeurs de pixel de pixels compris dans la deuxième caractéristique, en additionnant la luminance rouge et la luminance verte de la première caractéristique,
comparer la deuxième somme cumulative à un deuxième seuil,
dans lequel une existence/non-existence du défaut dans la première image est déterminée sur la base du deuxième résultat de détection, et le modèle étant configuré pour déterminer, sur la base d'une première image reçue du dispositif de traitement (10), une image comprenant un premier résultat de détection incluant une première caractéristique indiquant un élément de soudage, l'élément de soudage étant un bain de fusion, et un deuxième résultat de détection incluant une deuxième caractéristique indiquant le défaut.

2. Dispositif de traitement (10) selon la revendication 1, dans lequel
une qualité est déterminée comme étant une première qualité pour une position d'imagerie de la première image dans laquelle il est déterminé que le défaut n'existe pas, et
une qualité est déterminée comme étant une deuxième qualité pour une position d'imagerie de la première image utilisée comme une base du deuxième résultat de détection jugé inadéquat.

3. Dispositif de traitement (10) selon la revendication 1, dans lequel
une pluralité des premières images est introduite séquentiellement dans le premier modèle,
une pluralité des premiers résultats de détection et une pluralité des deuxièmes résultats de détection sont acquises, et
l'adéquation de la pluralité des deuxièmes résultats de détection est déterminée respectivement à l'aide de la pluralité des premiers résultats de détection.

4. Dispositif de traitement (10) selon la revendication 3, dans lequel
l'existence ou la non-existence du défaut dans chacune de la pluralité de premières images est déterminée sur la base du deuxième résultat de détection jugé adéquat, et
l'existence du défaut est confirmée lorsque le nombre de fois où l'existence du défaut a été déterminée consécutivement n'est pas inférieur à un troisième seuil.

5. Dispositif de traitement (10) selon la revendication 4, dans lequel
une qualité est déterminée comme étant une première qualité pour une position de la première image dans laquelle il est déterminé que le défaut n'existe pas,
une qualité est déterminée comme étant une deuxième qualité pour une position de la première image utilisée comme une base du deuxième résultat de détection jugé inadéquat, et
une qualité est déterminée comme étant une troisième qualité pour une position de la première image dans laquelle l'existence du défaut est confirmée.

6. Dispositif de traitement (10) selon la revendication 4 ou 5, dans lequel
une position du défaut confirmé est calculée.

7. Dispositif de traitement (10) selon l'une quelconque des revendications 4 à 6, dans lequel
un paramètre de soudage est modifié sur la base d'un résultat de confirmation du défaut.

8. Dispositif de traitement (10) selon la revendication 7, dans lequel
il est déterminé si le défaut confirmé est réparé ou non par soudage sur la base du paramètre de soudage modifié.

9. Dispositif de traitement (10) selon la revendication 7 ou 8, dans lequel
le soudage est effectué en déplaçant une source de chaleur le long d'une première direction, et
le paramètre de soudage modifié est au moins un élément choisi parmi le groupe constitué d'une vitesse de la source de chaleur dans la première direction, d'une position de la source de chaleur dans une deuxième direction perpendiculaire à la première direction, et d'une chaleur de sortie de la source de chaleur.

10. Dispositif de traitement (10) selon l'une quelconque des revendications 1 à 9, dans lequel
des données de qualité sont générées en utilisant un résultat de détermination de l'adéquation du deuxième résultat de détection, et
les données de qualité comprennent une pluralité de positions d'un objet de soudage, ainsi qu'une qualité pour chacune de la pluralité de positions.

11. Dispositif de traitement (10) selon la revendication 1, dans lequel
le dispositif de traitement (10) est configuré pour modifier un paramètre de soudage en fonction d'une position du défaut calculée en utilisant le deuxième résultat de détection.

12. Dispositif de traitement (10) selon la revendication 11, dans lequel
le paramètre de soudage modifié comprend au moins un élément choisi parmi le groupe constitué d'une vitesse de la source de chaleur dans la première direction, d'une position de la source de chaleur dans une deuxième direction perpendiculaire à la première direction, et d'une chaleur de sortie de la source de chaleur.

13. Système de soudage (1), comprenant :
le dispositif de traitement (10) selon l'une quelconque des revendications 1 à 12 ; et
un dispositif de soudage (20) effectuant au moins le soudage.

14. Procédé de traitement, comprenant :
l'accès à un dispositif de mémoire (30) ;
l'acquisition d'une première image, la première image étant capturée lors du soudage ;
l'entrée de cette première image dans un modèle ;
l'acquisition, à partir du modèle, d'une image comprenant un premier résultat de détection comportant une première caractéristique indiquant l'élément de soudage, et un deuxième résultat de détection comportant une deuxième caractéristique indiquant le défaut,
le calcul d'une première somme cumulative en utilisant des valeurs de pixel de pixels compris dans la première caractéristique, en additionnant la luminance rouge de la première caractéristique ;
la comparaison de la première somme cumulative à un premier seuil,
la détermination que le deuxième résultat de détection est adéquat, lorsque la première somme cumulative n'est pas inférieure au premier seuil, et
la détermination que le deuxième résultat de détection est inadéquat, lorsque la première somme cumulative est inférieure au premier seuil,
le calcul d'une deuxième somme cumulative en utilisant des valeurs de pixel de pixels compris dans la deuxième caractéristique, en additionnant la luminance rouge et la luminance verte de la première caractéristique ;
la comparaison de la deuxième somme cumulative à un deuxième seuil,
dans lequel une existence/non-existence du défaut dans la première image est déterminée sur la base du deuxième résultat de détection et le modèle étant configuré pour déterminer, sur la base d'une première image reçue, une image comprenant un premier résultat de détection incluant une première caractéristique indiquant un élément de soudage, l'élément de soudage étant un bain de fusion, et un deuxième résultat de détection incluant une deuxième caractéristique indiquant le défaut.

15. Support de stockage stockant un programme,
le programme comprenant des instructions pour amener le dispositif selon la revendication 1 à exécuter les étapes du procédé selon la revendication 14.
